# EUROPÄISCHE PATENTSCHRIFT

(11) **EP 1 586 363 B1**
(45) Veröffentlichungstag und Bekanntmachung des Hinweises auf die Patenterteilung: **24.12.2008**
(21) Anmeldenummer: 05007583.7
(22) Anmeldetag: 07.04.2005
(51) Int. Cl.: B01D 50/00, B01D 45/16, F16L 55/09

(54) **Kondensatfilter, insbesondere für Luftaufbereitungsmodule**
Condensate filter, in particularly for an air treatment module
Filtre à condensat, en particulier pour un module de traitement d'air

(30) Priorität: 16.04.2004 DE 202004005983 U
(43) Veröffentlichungstag der Anmeldung: 19.10.2005
(73) Patentinhaber: FESTO AG & Co. KG, 73734 Esslingen (DE)
(72) Erfinder: Jachmann, Robert, 73734 Esslingen (DE)
(74) Vertreter: Vetter, Hans

(56) Entgegenhaltungen:
- EP-A- 0 404 160
- DE-U- 8 006 571
- FR-A- 2 358 613
- US-A- 2 894 600
- US-A- 2 942 691
- US-A- 3 330 292
- US-A- 3 378 993
- US-A- 3 418 789
- US-A- 4 215 790
- US-A- 2001 005 986

## Beschreibung

Die Erfindung betrifft einen Kondensatfilter, insbesondere für Luftaufbereitungsmodule, mit den Merkmalen des Oberbegriffs des Anspruchs 1.

Ein an einem Regelventil unten angebrachter Kondensatfilter ist beispielsweise aus dem Prospekt "Wartungsgeräte MS-Reihe" der FESTO AG & Co, Info 408, Seite 83, unter der Bezeichnung Filter-Regelventil LFR bekannt. Bei einem solchen Kondensatfilter wird die durch den Lufteinlass einströmende Luft mit Hilfe der Dralleinrichtung in schnelle Rotation versetzt, sodass sich in der Luft enthaltene Flüssigkeit an der Innenwandung des Kondensatbehälters niederschlägt und schwerkraftbedingt nach unten in den Kondensatsammelraum fließt, wo es durch Öffnen des Kondensatauslasses ausströmen kann. Hierbei tritt das Problem auf, dass infolge der rotierenden Luftsäule auch das Kondensat in Rotation versetzt wird und durch Zentrifugalkraft am Ausströmen durch den Kondensatauslass gehindert wird. Um dies zu verhindern, wird bei der bekannten Anordnung ein scheibenförmiger Trennteller unterhalb der Filteranordnung angebracht, der einen kleinen Ringspalt zur Innenwandung des Kondensatbehälters bildet. Es hat sich allerdings herausgestellt, dass sich häufig ein Kondensatfilm an diesem Ringspalt bildet, der ein Abfließen des Kondensats zum Kondensatsammelraum hin verhindert oder zumindest sehr erschwert. Dennoch hat es sich herausgestellt, dass auch die Luftsäule und damit das Kondensat im Kondensatsammelraum über diesen Ringspalt noch in nachteiliger Weise in Rotation versetzt wird. Eine Beruhigungsscheibe unterhalb des Trenntellers soll dies verhindern, jedoch wird dadurch insgesamt eine recht umständliche und montageunfreundliche Anordnung erzielt.

Eine aus der DE 7622478 U bekannte Anordnung mit einem Kondensatfilter besitzt ebenfalls eine Trennscheibe, die einen zur Innenwandung des Kondensatbehälters hin schmalen Ringspalt bildet. Hierbei treten die bereits beschriebenen Nachteile auf. Um die Rotation im Kondensatsammelraum zu verhindern, ist dort zusätzlich eine recht aufwendige Rippenanordnung angeordnet, die teuer in der Herstellung umständlich in der Montage ist.

Aus der US-A-42 15 790 oder der US-A-33 30 292 ist ein Kondensatfilter gemäß dem Oberbegriff des Anspruchs 1 bekannt. Auch bei dem zu diesem Kondensatfilter offenbarten Trennteller kann ein Ringspalt zwischen Trennteller und Umfangswandbereich nicht sicher vermieden werden, so dass auch hier die bereits beschriebenen Nachteile auftreten können.

Die Aufgabe der vorliegenden Erfindung besteht darin, einen Trennteller so auszubilden, dass die Übertragung der Rotationsbewegung in den Kondensatsammelraum wirksam verhindert wird und dennoch ein gutes Abfließen des Kondensats in diesen Kondensatsammelraum gewährleistet ist.

Diese Aufgabe wird erfindungsgemäß durch einen Kondensatfilter mit den Merkmalen des Anspruchs 1 gelöst.

Durch die erfindungsgemäße Ausgestaltung des Trenntellers wird ein Ringspalt entlang der Innenwandung des Kondensatbehälters und ein entsprechend schlechtes Abfließen des Kondensats durch einen solchen sicher vermieden und dennoch ein Toleranzausgleich gewährleistet. Zusätzlich wird die Übertragung der Rotationsbewegung in den Kondensatsammelraum vermieden. Zum Abfließen des Kondensats sind mehrere, sich bis zum Anlagerand hin erstreckende Kondensatdurchlassöffnungen vorgesehen. Diese Öffnungen können im Gegensatz zum Ringspalt großflächiger ausgebildet werden und verhindern dennoch infolge der Wandbereiche zwischen den Kondensatdurchlassöffnungen die Übertragung der Rotationsbewegung in den Kondensatsammelraum. Dieser Trennteller kann in einfacher Weise als einstückiges Kunststoffteil kostengünstig hergestellt werden, wobei die Montage nur eines Elements, nämlich des Trenntellers, sehr einfach und kostengünstig vonstatten gehen kann.

Durch die in den Unteransprüchen aufgeführten Maßnahmen sind vorteilhafte Weiterbildungen und Verbesserungen des im Anspruch 1 angegebenen Kondensatfilters möglich.

Die randseitig offenen Kondensatdurchlassöffnungen sind in vorteilhafter Weise schlitzartig ausgebildet und verlaufen insbesondere in axialer Richtung. Auch sie tragen zur Flexibilität des Umfangswandbereichs des Trenntellers bei.

Um noch sicherer eine Übertragung der Rotationsbewegung in den Kondensatsammelraum zu verhindern, sind an der von der Wandung des Kondensatbehälters wegweisenden Innenseite des Trenntellers im Bereich der Kondensatdurchlassöffnungen Strömungsbremselemente vorgesehen, die zweckmäßigerweise streifenartig oder lamellenartig ausgebildet sind. Sie sind bevorzugt entlang der Begrenzungslinien der Kondensatdurchlassöffnungen angeordnet und erstrecken sich insbesondere senkrecht zu der inneren Wandfläche des Trenntellers.

Der konusartige Bereich des Trenntellers ist bevorzugt an einer ebenen Scheibe angebracht oder einstückig angeformt, um ein einstückiges Bauteil zu erreichen.

Der Trennteller ist zweckmäßigerweise an der Unterseite der Filteranordnung oder an deren Halterung angeordnet.

Ein Ausführungsbeispiel der Erfindung ist in der Zeichnung dargestellt und in der nachfolgenden Beschreibung näher erläutert. Es zeigen:
- Fig. 1: eine Schnittdarstellung eines Kondensatfilters mit Trennteller,

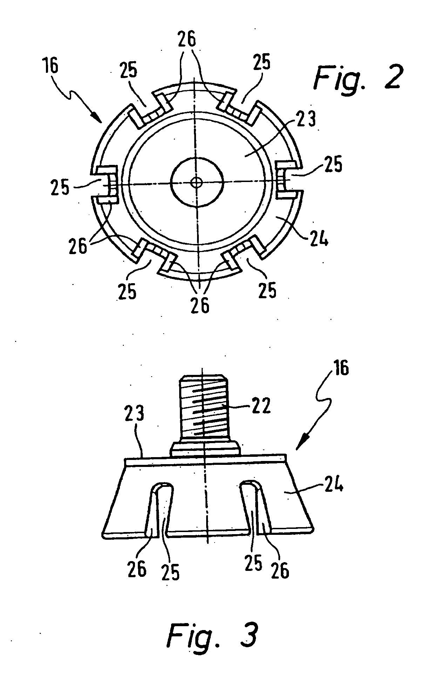

- Fig. 2: eine Ansicht des Innenraums dieses Trenntellers von unten und
- Fig. 3: eine Seitenansicht dieses Trenntellers.

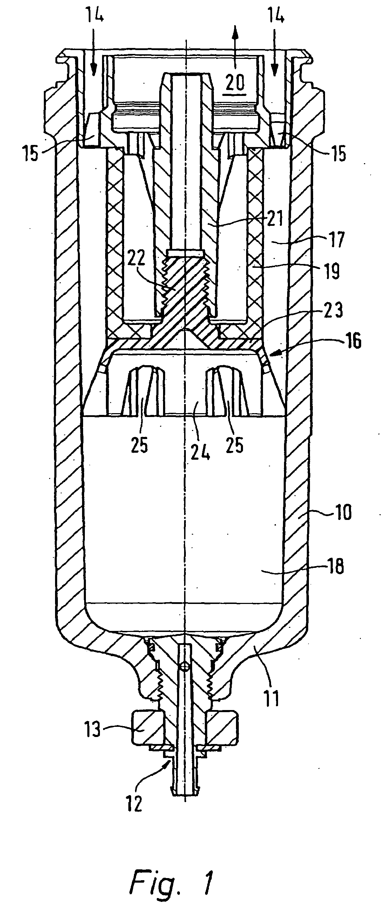

Der in Fig. 1 dargestellte Kondensatfilter dient zum einen zum Abtrennen von in der Luft enthaltenem Kondensat und zum anderen zum Filtern von Luft und wird üblicherweise in Verbindung mit Luftaufbereitungsmodulen eingesetzt. Wie aus dem eingangs angegebenen Stand der Technik entnehmbar, kann dieser Kondensatfilter beispielsweise zusammen mit einem Regelventil als Filter-Regelventil für ein Wartungsgerät verwendet werden.

Der Kondensatfilter besitzt ein oben offenes zylindrisches Gehäuse 10 aus einem Metall oder Kunststoffmaterial, wobei sich insbesondere durchsichtiges Kunststoffmaterial eignet, da dann der Pegelstand des abgeschiedenen Kondensats leicht erkennbar ist. Prinzipiell eignet sich auch Glas als Material. Dieses Gehäuse 10 besitzt am unteren Ende einen Boden 11, der mit einem Kondensatablassventil 12 versehen ist, um sich gebildetes Kondensat abzulassen. Hierzu wird das Kondensatablassventil 12 mit Hilfe eines Betätigungselements 13 geöffnet und danach wieder verschlossen. Es sind auch automatische Kondensatablassvorrichtungen bekannt, die anstelle dieses Kondensatablassventils 12 eingesetzt werden können.

Am oberen Ende des Gehäuses 10 ist ein ringförmiger Lufteinlass 14 angeordnet, durch den die Luft in den GehäuseInnenraum des Gehäuses 10 einströmen kann. Hierbei passiert sie eine gewöhnlich als Drallscheibe bezeichnete Dralleinrichtung 15, durch die sie so in Rotation versetzt wird, dass sie an der Innenwandung des Gehäuses 10 entlangströmt und dort durch Reibung und Zentrifugalwirkung das in ihr enthaltene Kondensat abscheidet.

Der Innenraum des Gehäuses 10 ist durch einen ungefähr mittig angeordneten Trennteller 16 in einen oberen Filterraum 17 und einen unteren Kondensatsammelraum 18 aufgeteilt. Im oberen Filterraum 17 ist ein zylindrischer Luftfilter 19 angeordnet, durch den die vom Kondensat befreite Luft zum Luftauslass 20 des Kondensatfilters gelangen kann. Der Luftfilter 19 ist an einer Halterung 21 angeordnet, an der auch der Trennteller 16 mit Hilfe eines konzentrischen Bolzens 22 fixiert ist. Der Bolzen 22 kann beispielsweise als Schraubbolzen ausgebildet sein.

Der Trennteller 16 besteht aus einer ebenen, den Bolzen 22 tragenden Scheibe, die den Boden des topfartigen Trenntellers 16 bildet. Diese Scheibe 23 liegt im montierten Zustand am Luftfilter 19 an. Vom Rand der Scheibe 23 aus erstreckt sich ein Umfangswandbereich 24 schräg nach unten bis zur Anlage an der Innenwandung des Gehäuses 10. Dabei vergrößert sich der Durchmesser dieses Umfangswandbereichs stetig und konusartig bis zur elastischen Anlage an der Innenwandung des Gehäuses 10. Zur Vermeidung eines Ringspalts zwischen dem Trennteller 16 und der Innenwandung des Gehäuses 10 ist der Umfangswandbereich 24 elastisch ausgebildet und liegt somit elastisch an der Innenwandung an.

Der Umfangswandbereich 24 des Trenntellers 16 ist mit sechs schlitzartigen Kondensatdurchlassöffnungen 25 versehen, die sich in axialer Richtung erstrecken und zum Anlagerand an der Innenwandung des Gehäuses 10 hin offen sind. Dadurch teilt sich der Umfangswandbereich 24 in sechs flügelartige Bereiche auf, die untereinander durch die Kondensatdurchlassöffnungen 25 getrennt sind.

An den von der Innenwandung des Gehäuses 10 radial nach innen wegweisenden Innenflächen der Umfangswandung 24 sind entlang der Kondensatdurchlassöffnungen 25 Strömungsbremselemente 26 angeformt, die streifenartig bzw. lamellenartig ausgebildet sind und sich jeweils entlang der Innenränder der Kondensatdurchlassöffnungen 25 erstrecken. Sie sind senkrecht zur Innenwandung des Umfangswandbereichs 24 ausgerichtet.

Der Trennteller 16 ist insgesamt einstückig aus Kunststoff ausgebildet, wobei auch mehrstückige Ausführungen denkbar sind. Die Zahl und Gestalt der Kondensatdurchlassöffnungen 25 ist selbstverständlich nicht auf die des Ausführungsbeispiels beschränkt, sondern kann variabel gestaltet werden. Die lamellenartigen Strömungsbremselemente 26 können anstelle der Dreiecksgestalt des Ausführungsbeispiels auch eine Rechteckgestalt oder sonstige Gestalt aufweisen.

Das durch die Rotation der Luft im Filterraum 17 abgeschiedene Kondensat läuft schwerkraftbedingt nach unten und gelangt durch die Kondensatdurchlassöffnungen 25 des Trenntellers 16 in den Kondensatsammelraum 18, wo es mittels des Kondensatablassventils 12 abgelassen werden kann. Die Rotation der Luft kann sich infolge der axial ausgerichteten Kondensatdurchlassöffnungen 25 nicht oder nur gering in den Kondensatsammelraum 18 übertragen. Diese Wirkung wird durch die Strömungsbremselemente 26 noch unterstützt. Das Kondensat im Kondensatsammelraum 18 wird daher nicht oder so gut wie nicht in Rotation versetzt, sodass der Kondensatsammelraum 18 vollständig entleert werden kann. Ein Ansteigen des Kondensats entlang der Innenwandung des Gehäuses 10 tritt daher ebenfalls nicht auf.

## Patentansprüche

1. Kondensatfilter, insbesondere für Luftaufbereitungsmodule, mit einem eine Filteranordnung(19) aufweisenden Kondensatbehälter (10), mit einer am oberen Lufteinlass (14) die einströmende Luft in Rotation versetzenden Dralleinrichtung (15) und mit einem den Behälter-Innenraum in einen oberen, die Filteranordnung (19) enthaltenden Filterraum (17) und einen unteren Kondensatsammelraum (18) aufteilenden Trennteller (16), wobei der Kondensatsammelraum (18) am unteren Ende mit einem Kondensatauslass versehen ist, und wobei sich ein Umfangswandbereich (24) des topfartigen Trenntellers (16) im Durchmesser nach unten hin bis zur Anlage am Innenumfang des Kondensatbehälters (10) konusartig vergrößert und mehrere, sich bis zum Anlagerand hin erstreckende Kondensatdurchlassöffnungen (25) besitzt, **dadurch gekennzeichnet, dass** wenigstens der am Innenumfang des Kondensatbehälters (10) anliegende Bereich des Trenntellers (16) zur elastischen Anlage flexibel ausgebildet ist.

2. Kondensatfilter nach Anspruch 1, **dadurch gekennzeichnet, dass** die randseitig offenen Kondensatdurchlassöffnungen (15) schlitzartig ausgebildet sind und insbesondere in axialer Richtung verlaufen

3. Kondensatfilter nach einem der vorhergehenden Ansprüche, **dadurch gekennzeichnet, dass** an der von der Innenwandung des Kondensatbehälters (10) wegweisenden Innenseite des Trenntellers (16) im Bereich der Kondensatdurchlassöffnungen (25) Strömungsbremselemente (26) vorgesehen sind.

4. Kondensatfilter nach Anspruch 3, **dadurch gekennzeichnet, dass** die Strömungsbremselemente (26) entlang der Begrenzungslinien der Kondensatdurchlassöffnungen (25) angeordnet sind, vorzugsweise senkrecht zu der Innenwandung des Trenntellers (16) .

5. Kondensatfilter nach Anspruch 3 oder 4, **dadurch gekennzeichnet, dass** die Strömungsbremselemente (26) streifenartig oder lamellenartig ausgebildet sind und insbesondere eine Dreiecksgestalt aufweisen.

6. Kondensatfilter nach einem der vorhergehenden Ansprüche, **dadurch gekennzeichnet, dass** der konusartige Umfangswandbereich (24) des Trenntellers (16) an einer ebenen Scheibe (23) angebracht oder einstückig angeformt ist

7. Kondensatfilter nach einem der vorhergehenden Ansprüche, **dadurch gekennzeichnet, dass** der Trennteller (16) an der Unterseite der Filteranordnung (19) oder an deren Halterung (21) angeordnet ist.

8. Kondensatfilter nach einem der vorhergehenden Ansprüche, **dadurch gekennzeichnet, dass** der Innenraum der rohrförmigen Filteranordnung (19) mit einem Luftausläss (20) in Verbindung steht.

## Claims

1. Condensate filter, in particular for air preparation modules, with a condensate reservoir (10) comprising a filter assembly (19), with a swirl device (15) inducing the rotation of the air entering at the upper air inlet (14) and with a separating plate (16) dividing the interior of the reservoir into an upper filter chamber (17) containing the filter assembly (19) and a lower condensate collecting chamber (18), wherein the condensate collecting chamber (18) is provided with a condensate outlet at the bottom end, and wherein a circumferential wall region (24) of the pot-like separating plate (16) conically increases in its diameter towards the bottom until contacting the inner circumference of the condensate reservoir (10) and has a plurality of condensate openings (25) extending to the contact edge, **characterised in that** at least the region of the separating plate (16) which contacts the inner circumference of the condensate reservoir (10) is designed to be flexible for elastic contact.

2. Condensate filter according to claim 1, **characterised in that** the condensate openings (15) which are open at the edge are designed as slots and in particular extend in the axial direction.

3. Condensate filter according to any of the preceding claims, **characterised in that** flow braking elements (26) are provided in the region of the condensate openings (25) on the inside of the separating plate (16) which is remote from the inner wall of the condensate reservoir (10).

4. Condensate filter according to claim 3, **characterised in that** the flow braking elements (26) are disposed along the boundary lines of the condensate openings (25), preferably at right angles to the inner wall of the separating plate (16).

5. Condensate filter according to claim 3 or 4, **characterised in that** the flow braking elements (26) are strip-shaped or lamellar, having a triangular shape in particular.

6. Condensate filter according to any of the preceding claims, **characterised in that** the conical circumferential wall region (24) of the separating plate (16) is fitted to or integrated with a flat disc (23).

7. Condensate filter according to any of the preceding claims, **characterised in that** the separating plate (16) is located on the underside of the filter assembly (19) or on its holder (21).

8. Condensate filter according to any of the preceding claims, **characterised in that** the interior of the tubular filter assembly (19) is connected to an air outlet (20).

## Revendications

1. Filtre à condensats, en particulier pour des modules de traitement d'air, avec un réservoir de condensats (10) comportant un dispositif de filtration (19), avec un dispositif de turbulence (15) mettant en rotation l'air d'admission à l'entrée d'air supérieure (14) et avec un plateau séparateur (16) divisant l'intérieur du réservoir en un compartiment de filtration supérieur (17) renfermant le dispositif de filtration (19) et un compartiment inférieur collecteur de condensats (18), dans lequel le compartiment inférieur collecteur de condensats (18) est muni à l'extrémité inférieure d'une évacuation de condensats et dans lequel le diamètre d'une zone de paroi périphérique (24) du plateau séparateur (16) en forme de pot s'agrandit en forme de cône vers le bas jusqu'à prendre appui sur la périphérie intérieure du réservoir de condensats (10) et ladite zone comporte plusieurs ouvertures de passage de condensats (25) s'étendant jusqu'au bord d'appui, **caractérisé en ce qu'**au moins la zone du plateau séparateur (16) adjacente à la périphérie intérieure du réservoir de condensats (10) est réalisée de manière flexible pour obtenir un appui élastique.

2. Filtre à condensats selon la revendication 1, **caractérisé en ce que** les ouvertures de passage de condensats (25) ouvertes du côté du bord sont réalisées en forme de fente et s'étendent en particulier dans le sens axial.

3. Filtre à condensats selon l'une des revendications précédentes, **caractérisé en ce qu'**il est prévu des éléments de freinage hydrodynamique (26) sur le côté intérieur du plateau séparateur (16) dirigé à l'opposé de la paroi intérieure du réservoir de condensats (10) dans la zone des ouvertures de passage de condensats (25).

4. Filtre à condensats selon la revendication 3, **caractérisé en ce que** les éléments de freinage hydrodynamique (26) sont disposés le long des lignes de délimitation des ouvertures de passage de condensats (25), de préférence perpendiculairement à la paroi intérieure du plateau séparateur (16).

5. Filtre à condensats selon la revendication 3 ou 4, **caractérisé en ce que** les éléments de freinage hydrodynamique (26) sont réalisés en forme de stries ou en forme de lamelles et présentent notamment une forme triangulaire.

6. Filtre à condensats selon l'une des revendications précédentes, **caractérisé en ce que** la zone de paroi périphérique en forme de cône (24) du plateau séparateur (16) est montée ou moulée d'un seul tenant sur un disque plan (23).

7. Filtre à condensats selon l'une des revendications précédentes, **caractérisé en ce que** le plateau séparateur (16) est disposé sur le côté inférieur du dispositif de filtration (19) ou sur le support (21) de celui-ci.

8. Filtre à condensats selon l'une des revendications précédentes, **caractérisé en ce que** l'espace intérieur du dispositif de filtration tubulaire (19) est connecté avec un échappement d'air (20).
